# EUROPEAN PATENT APPLICATION

(11) **EP 2 930 935 A1**
(43) Date of publication of application: **14.10.2015**
(21) Application number: 14164465.8
(22) Date of filing: 11.04.2014
(51) Int. Cl.: H04N 21/433, H04N 21/2747

(54) **Method of delivering media content**

(71) Applicant: Television Broadcasts Limited, Kowloon (CN)
(72) Inventor: Tang, Ho Wai, Kowloon (HK); Law, Terence Heung Wing, Kowloon (HK); Tam, Yiu Cheong Henry, Kowloon (HK); Chan, Yiu Wai, Kowloon (HK)
(74) Representative: Dearden, Anthony James

(57) **Abstract**

There is provided a method of delivering media content on a device. A request to stream media content is received at the device. At least a first portion of the requested media content is retrieved from a local media store of the device. The at least a first portion of the requested media content is delivered to a media player of the device for playback. In parallel to the delivery of the at least a first portion of the requested media content, at least a second portion of the requested media content is downloaded from a remote media store to the device.

HLS streaming is extended to encompass both pre-download and real-time streaming modes. In addition, retrieved media content is protected from illegal copying, as the device is registered with a certificate authority and authenticated on key servers. The operations may be entirely transparent to the media player.

## Description

### Field of the Invention

The present invention relates to a method of delivering media content on a device, and in particular to a method of delivering media content using HTTP Live Streaming. The invention also relates to a device and system for delivering media content on the device.

### Background to the Invention

Multimedia, such as video and/or audio data, may be streamed on an end-user device using well-known techniques. The media content is downloaded or otherwise retrieved from a provider, and is simultaneously delivered or presented to the user whilst downloading. For example, streaming video may be simultaneously downloaded to a user device and displayed for viewing. Similarly, audio content may be simultaneously downloaded to a user device and played back for listening. Thus, by streaming media content, a user does not necessarily need to first download the content and, only once the content is fully downloaded, access it for consumption (e.g. viewing, listening, etc.).

Media streaming using HTTP as a transport protocol over the Internet has benefits over other traditional streaming methods. For instance, many devices and systems connected to the Internet support HTTP protocol. Video content as streamed using HTTP is typically broken into small pieces of data referred to as segments, wherein each segment may hold several seconds of video data. Thus, a one-hour video may contain hundreds of segments. A media player can start displaying the video content as soon as only a few segments are received. In addition, HTTP supports adaptive bitrate streaming that allows a media player to select a higher or lower quality video on-the-fly, depending on the connection bandwidth currently available to the device. Furthermore, by using HTTP, media content can also be encrypted. Streaming protocols that employ this method of streaming, such as HTTP Live Streaming (HLS), Smooth Streaming, and MPEG-DASH, have become widely adopted on mobile devices.

Streaming media is, however, relatively bandwidth intensive for high quality media content, and in general a relatively fast Internet connection is required in order to provide a satisfactory user experience. If the connection is lost, for example if the device goes offline, then streaming can be interrupted and the media content may no longer be delivered to the end-user until the connection is re-established. This clearly adversely affects the user experience.

There is therefore a need in the art to more reliably deliver media content whenever and wherever a user would consume the media content. It would also be preferable if the media content, provided to the user on a device, were protected against illegal copying or redistributing, which is against the interests of the content providers. The present invention seeks to provide such an improved method of streaming media content.

### Summary of the Invention

According to a first aspect of the invention, there is provided a method of streaming media content on a device. A request to stream media content is received at the device. At least a first portion of the requested media content is retrieved from a local media store of the device. The at least a first portion of the requested media content is delivered to a media player of the device for playback. In parallel to the delivery of the at least a first portion of the requested media content, a second portion of the requested media content is downloaded from a remote media store to the device.

A portion of media content may comprise one or more media segments. Segments of media content may therefore be delivered to a media player of the device for playback. If the segments are stored in the local media store (for example if they have previously been downloaded to the device), playback of the stored media segments may commence as soon as the streaming request is received and the segments have been fetched or retrieved from the local store. Other segments of the requested media content may be downloaded from a remote media store and delivered to the media player as a stream. The downloading, streaming, and playback of media segments may operate in parallel to one another.

In one embodiment, whether a local media store of the device comprises at least a first portion of the requested media content may be determined. The at least a first portion of the requested media content may be delivered to a media player of the device for playback. Whether a remote media store comprises at least a second portion of the requested media content stored thereon may be determined. In parallel to the delivery of the at least a first portion of the requested media content, the at least a second portion of the requested media content may be downloaded from the remote media store to the device.

Thus, the method may comprise locating each media portion (or segment(s)) and its respective location, from a local media store or a particular remote media store. The locating may be based on metadata comprised in the requested media content. Each media segment may then be streamed to a media player of the device for playback, either by fetching it from a local media store of the device, or else by downloading it from remote media store. The locating, downloading, and streaming functions may be operated in parallel to provide a satisfactory playback experience for the end-user of a device.

The device may be any device capable of streaming media content. For example, the device may be a portable device such as laptop or tablet. The device may be a mobile device such as a smartphone, or may be a television or other device capable of displaying video, or else may be a set top box capable of connecting to a display device. Alternatively, the device does not need to have a display and could be arranged to stream purely audio content.

The local media store may be a portion of a memory of the device for storing one or more media files. The device may comprise more than one physical storage. The remote media store may be a traditional media server, a server on a cloud, or may form part of one or more content distribution networks (CDNs). Other types of remote media stores may be used.

The first and second portions of the requested media content may comprise any amount of the requested media content. For example, the degree of media content downloaded from the remote store may be close to 100%, in which case the operation of the method approaches that of traditional real-time streaming. Alternatively, the majority of the media content may be fetched from the local store, in which case the quality of playback experience may be optimised due to the fact that much of the requested media content is already stored on the device. The operation of the media player may be unaffected by the amount of content that is fetched from the local media store and that which is available as pre-downloaded (e.g. stored in the local store of the device). As a result, the invention improves the location transparency of a media stream for the media player.

The at least a second portion of requested media content may be downloaded directly to the local media store for delivery to the media player. Alternatively, the at least a second portion of requested media content may be downloaded and delivered directly to the media player. Thus, the media segments may be continuously delivered to the media player, with no break in the streaming, regardless of the different locations of each media segment.

The at least a second portion of requested media content may be downloaded according to a streaming protocol, such as the HTTP Live Streaming (HLS) protocol. The at least a second portion of requested media content may be downloaded from the Internet. In some embodiments, the requested media content may be downloaded from other types of networks, such as a LAN, wireless LAN, mobile and cellular 3G/4G/LTE, etc.

The requested media content may comprise a plurality of media segments. The at least a first portion of the requested media content and the at least a second portion of the requested media content may each comprise one or more of the plurality of media segments.

Each media segment may comprise media content for HTTP transport. Furthermore, in addition to a plurality of media segments, the requested media content may comprise metadata, and the metadata may comprise a description or other information relating to the requested media content, as well as a list of media segments in the requested media content.

Using a media locator unit (MLU) of the device, one or more decryption keys may be downloaded to a local key store on the device. In particular, at least one of the first and second portions of the requested media content may be encrypted, and the one or more decryption keys may be arranged to decrypt the at least one of the first and second portions of the requested media content. HLS in particular supports encryption of the media stream. The decryption keys may be downloaded from a remote server or other remote storage.

Using a client security agent (CSA) of the device, one or more authentication certificates may be downloaded to a certificate store on the device. The decryption keys may be downloaded from a remote server or other remote storage.

Downloading the one or more decryption keys to the key store may comprise first requesting by the MLU an authentication certificate from the CSA, and the requested authentication certificate may then be delivered from the CSA to the MLU.

Whilst encrypted media content and decryption keys may be cached on the client device, the CSA may be deployed alongside the MLU to protect the interests of media content providers. The CSA may request X.509 client certificates from a public key infrastructure certificate authority and manage the certificate that is used for authenticating the client on different key servers.

Thus, if the device seeks to retrieve one or more decryption keys from a particular remote key server for the first time, the key server may request authentication of the device through delivery of the appropriate authentication certificate. The CSA of the device may be arranged to retrieve and deliver such a certificate to the MLU for subsequent delivery to the key server, for authentication.

Advantageously, with the MLU and CSA operating in tandem, the media content of HLS streaming may be protected through encryption and the client devices may be authenticated to allow access to media content.

The media store, the key store and the certificate store may each be located in a secured storage of the device. The secured storage may be guaranteed by the operating system of the device, such as Apple iOS™, or Google Android™, or any other similar operating environment that allows only valid users to gain access to the storage area.

Whilst media content becomes ever easier to access and consumed by users on various devices, media content providers require reliable control over who or what devices can access the content. Once media content is delivered to the client, the user can redistribute it, or carry out other actions on the media content that may violate the usage policy of the content provider.

Thus, according to the invention, it can be determined whether or not the secured storage in a protected environment has been compromised. If the secured storage has been compromised, the contents of at least one of the media store, key store and certificate store may be deleted, and/or playback of the requested media content may be stopped. Furthermore, the MLU and the CSA may be arranged to communicate with each other. If the MLU and the CSA may no longer communicate with each other, or if the communication is in doubt, the contents of at least one of the media store, key store and certificate store may be deleted, and/or playback of the requested media content may be stopped.

Therefore, the CSA may verify and ensure the integrity and security of the secured storage in its operating environment, and may confirm the status to the

MLU. The CSA may additionally check the maintenance of the security policy of the operating environment. If the CSA detects a violation of the security policy, the CSA may clear the certificate store and notify the MLU, and the MLU, upon receipt of the notification from the CSA, may stop media stream processing, as well as clear the key store and the local media store. All stored client certificates, cached decryption keys, and encrypted media may be deleted if any user behaviour violating usage policy, or other breach of the secured environment, is detected.

In addition, the MLU may receive periodic updates from the CSA on the status of the protected application environment of the device. When the MLU loses contact with the CSA and cannot guarantee it is operating in a secured environment, the media streaming may be stopped and the certificate store, key store and local media store may each be cleared of their contents.

The decryption key and/or the requested media content may be arranged to expire a predetermined period of time after downloading/retrieval. Upon expiry, playback of the requested media content may be stopped. In addition, upon expiry, the decryption key and/or the requested media content may be deleted from the device.

According to further aspects of the invention, there are provided a device arranged to carry out the above method, and a system comprising such a device.

### Brief Description of the Drawings

A specific embodiment of the invention will now be described in conjunction with the accompanying drawings, of which:
Figure 1 is a diagram of a system in accordance with an embodiment of the invention; and

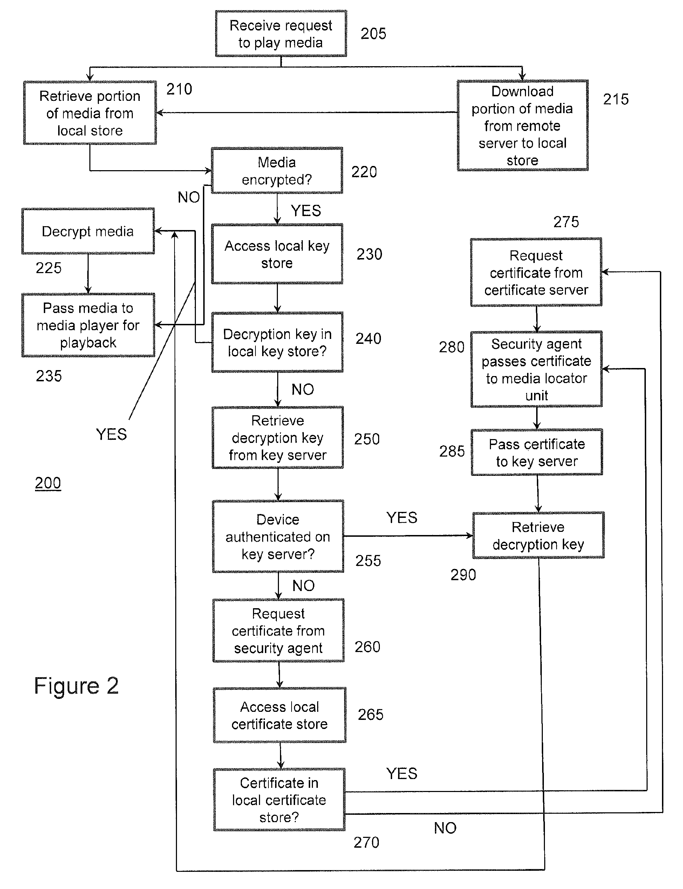

Figure 2 is a flow chart illustrating steps taken by a method according to an embodiment of the invention.

### Detailed Description of a Specific Embodiment

The present invention seeks to provide an improved method of delivering media content. Whilst various embodiments of the invention are described below, the invention is not limited to these embodiments, and variations of these embodiments may well fall within the scope of the invention which is to be limited only by the appended claims.

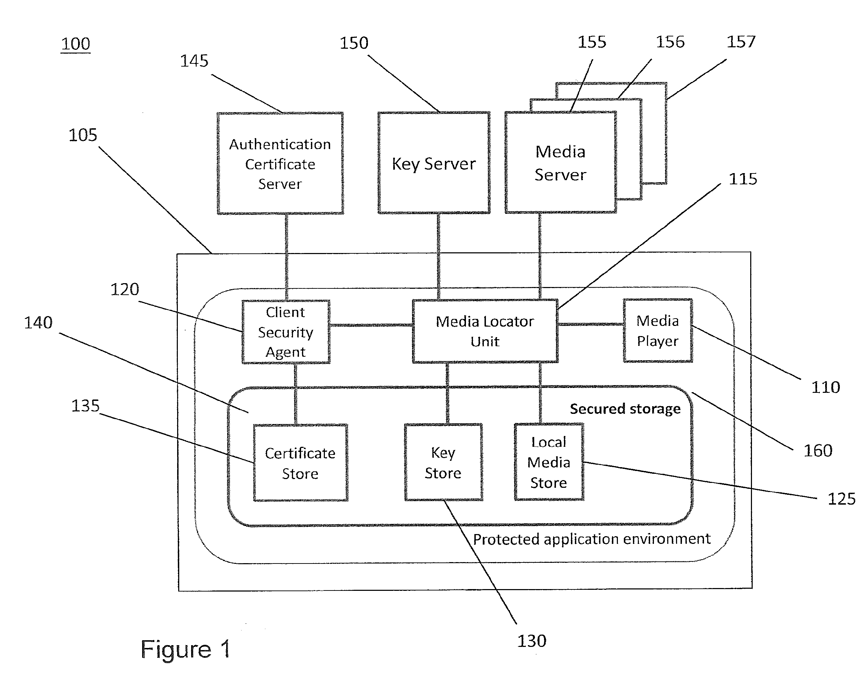

Figure 1 illustrates a media streaming system 100 in accordance with a preferred embodiment of the invention. On a client or end-user side of system 100, system 100 includes client device 105 such as a portable mobile device. Client device 105 may be any other device capable of media content playback, such as a television, PC, laptop, mobile phone, set top box, audio system, etc.

Client device 105 includes media player 110, media locator unit 115 (MLU) and client security agent 120 (CSA). Media player 110, MLU 115 and CSA 120 may be comprised in one or more software modules of an application in an operating system of client device 105.

Client device 105 further comprises local media store 125, key store 130 and certificate store 135. Local media store 125, key store 130 and certificate store 135 reside in a secured memory or secured storage 140 of client device 105. Each store does not need to reside in a common secured storage but may reside in separate secured storages. The memory size of local media store 125 is substantively larger than the memory buffer of a traditional media player, so that client device 105 may continue playback of media content for a short period of time if Internet connection is lost and downloading is not yet finished. Media player 110, MLU 115 and CSA 120 are components of an application in a secured environment. The application is in a protected runtime environment of the operating system, such as the Apple iOS, Google Android OS, etc., or protected application environment 160, such that individual components cannot be replaced. Protected application environment 160 includes secured storage 140 such that the data stored therein cannot be accessed when the protected application environment is compromised.

On the server side of multimedia streaming system 100, there are provided authentication certificate server 145, or public key infrastructure certificate authority (PKI CA), key server 150 and media server 155. PKI CA 145, key server 150 and media server 155 may form part of a Content Distribution Network (CDN) or as part of similar cloud services. They may reside on a common server or separate servers. CDNs provide convenient access to media content duplicated across the Internet. In other embodiments, PKI CA 145, key server 150 and media server 155 may reside on other user devices networked to client device 105. In addition, PKI CA 145, key server 150 and media server 155 may be server applications, each of them having multiple instances of services running independently, anywhere on the Internet or on a private network that MLU 115 has access to. The media content and media segments may be downloaded from any number of media servers 155, 156, 157.

Media player 110 is arranged to process and playback media content it receives, such as media segments, according to the HLS protocol. For example, media player 110 may process and display video content such as a live television stream or a film, or audio content such as music tracks or other audio files. Media player 110 may communicate with MLU 115 such that media player 110 may receive media content passed to it by MLU 115. Media player 110 may be a standard component provided by the operating system, in order to simplify the implementation of the present invention.

MLU 115 is a component of client device 105 that may retrieve media content from local media store 125. MLU 115 may furthermore retrieve decryption keys from key store 130. In particular, MLU 115 is arranged to use decryption keys from key store 130 to decrypt and process encrypted media content so that client device 105 is capable of media content playback even when offline, i.e. when disconnected from the Internet. MLU 115 is further arranged to download decryption keys from key server 150 to client device 105, as well as download media content from media server 155 or media servers 155, 156, 157 to client device 105. The downloading is preferably carried out using HTTP according to the HLS protocol. When downloaded, decryption keys are stored in key store 130 and media content is stored in local media store 125. Different keys may be allocated respectively to different media contents, or to different segments of a media content or media contents.

In addition to ensuring a protected runtime environment on the client side, CSA 120 is further arranged to authenticate client device 105 on key server 150 by using X.509 client certificates. Other forms of client certificates or authentication tokens may be used. X.509 client certificates are obtained from PKI CA 145, downloaded by CSA 120 and stored locally in certificate store 135 of client device 105. Different client certificates may be required for playback of different media contents. The client certificates may be invalidated by PKI CA 145, and MLU 115 is required to provide a valid client certificate in order to retrieve decryption keys from key server 150.

A method of operation of media streaming system 100 will now be described, in accordance with a preferred embodiment of the invention.

In traditional media streaming techniques, media content belonging to providers is stored on servers, and a client application running on a client device downloads the media content whilst simultaneously displaying the content in parallel. The operation between a media server and a media client is specified by a streaming protocol.

HLS is a streaming protocol that uses the HTTP transport protocol for media streaming over the Internet. HLS supports streaming with encryption (AES-128) of the media content. When HLS is used in encryption mode, a decryption key is provided to the client application, usually through a web service.

The present invention extends the streaming operation to support both pre-download of media content as well as a mixed operation mode according to which pre-downloaded content and real-time streaming content are used together. The media player on the client side can therefore operate as if it were performing normal HLS processing.

According to a preferred method 200, at step 205 client device 105 receives a request to stream media content using HLS. For example, a user of client device 105 may input a command to open media content, such as by accessing a link via a web page displayed to the user whilst connected to the Internet. The request may first be received at media player 110 which then passes the request to MLU 115, or else may be received directly by MLU 115.

Upon receipt at MLU 115 of the request for streaming media, at step 210 MLU 115 retrieves or fetches any relevant media stream segments or other requested media content from local media store 125. This is instead of searching for and downloading the entirety of the requested media content from a remote server. Simultaneously to step 210, at step 215 MLU 115 downloads to local media store 125 the remaining requested HLS media segments from media server 155.

For example, the requested media content may comprise metadata of a video and a number of media segments of the requested media content. The metadata may contain information such as details of the media segments, the location of media servers from which the media segment can be downloaded, whether the video is encrypted, and the location of the key server which may provide the decryption key or keys necessary to decrypt the media content. The media segments may be assembled by MLU 115 according to the streaming protocol.

When client device 105 is in a mixed operation mode, a plurality of such media segments may form a first portion of the requested media content, and may be stored in local media store 125. Any other media segments pertaining to the requested media content, forming a second portion of the requested media content, may in parallel be downloaded to local media store 125 from media server 155.

Thus, one or more of the requested media segments are stored in local media store 125. Once fetched by MLU 115, at step 235 this portion is delivered to media player 110 for playback. Whilst media player 110 is processing and displaying/playing the already downloaded segments of the requested media content, the remaining segments are downloaded in parallel from media server 155 to local media store 125, similarly to real-time streaming.

In conventional data streaming technologies, such as the HLS protocol, if the client device goes offline before the downloading of media content is complete, and subsequently goes online after some elapsed time, then the downloading of media content needs to restart.

According to an embodiment of the present invention, if the Internet connection is lost whilst downloading of media content is still in progress, MLU 115 continues to fetch media segments from local media store 125 and deliver them to media player 110. Once client device 105 is reconnected to the Internet, MLU 115 will automatically resume the download process for the unfinished media segments according to the metadata, and the user may not notice the Internet disconnection ever occurred (provided the disconnection does not last too long), as the playback is continuous.

As already mentioned, HLS protocol allows for encryption of the streaming media to provide for digital rights management such that rights holders of the media content may control distribution and dissemination of the media once stored on client device 105.

At step 220, MLU 115 determines if the requested media content, retrieved from local media store 125, is encrypted. If encrypted, at step 230 MLU 115 accesses local key store 130 of client device 105. If the necessary decryption key (or keys) is stored in local key store 130, MLU 115 retrieves the decryption key and decrypts the encrypted media content at step 225. The decrypted media content may then be passed to media player 110 for playback (step 235). Alternatively, the encrypted media content may be passed to media player 110 with the decryption key, in which case media player 110 may decrypt the media content prior to playback.

If the necessary key is not stored in local key store 130, then at step 250 MLU 115 accesses key server 150. At step 255, key server 150 determines if client device 105 is authorised to access the desired key. If client device 105 is authenticated on key server 150, then at step 290 MLU 115 may download or otherwise retrieve the decryption key from key server 150. MLU 115 may then decrypt the encrypted media content and pass the decrypted media content to media player 110. If MLU is not authenticated on key server 150, then at step 260 MLU 115 requests the relevant authentication certificate from CSA 120.

At step 265, CSA 120 accesses local certificate store 135 on client device 105 and at step 270 determines if the requested authentication certificate is stored thereon. If the requested authentication certificate is stored in local certificate store 135, then CSA 120 retrieves the certificate and passes it to MLU 115, at step 280 (described in more detail below). If at step 270 it is determined that the requested authentication certificate is not stored in local certificate store 135, then at step 275 CSA 120 requests the relevant authentication certificate from PKI CA 145. At step 280, CSA 120 downloads or otherwise retrieves the authentication certificate from PKI CA 145. At step 285, CSA 120 passes the authentication certificate to MLU 115, which at step 285 then passes the authentication certificate to key server 150. Once key server 150 has authenticated client device 105 using the authentication certificate, at step 290 the relevant decryption key is downloaded or otherwise retrieved by MLU 115. The operation then proceeds to step 225, where the encrypted media content is decrypted and at step 235 the decrypted media content is finally passed to media player 110 for playback. The above method is merely illustrative of a particular embodiment, and many steps may be omitted/added without departing from the invention.

In order to prevent the dissemination of illegal copies of downloaded media content, local media store 125 and key store 130 are located in secured storage 140 of protected application environment 160 provided by the operating system on client device 105, such as Apple iOS or Google Android OS, as already mentioned. Other operating systems able to establish protected application environment 160 may be used.

CSA 120 periodically, for example every minute, verifies the integrity of secured storage 140, as well as that of protected application environment 160. The verification may be implemented based on a function provided by the operating system. For example, if client device 105 is jail-broken or rooted, or if secured storage 140 is otherwise determined to be compromised, CSA 120 alerts MLU 115, and MLU 115 deletes existing data in local media store 125 and key store 130. In addition, playback of media content by media player 110 is stopped. MLU 115 requires a positive response from CSA 120 regarding either secured storage 140 or protected application environment 160 not being compromised, before playback can proceed. The contents of certificate store 135 may also be deleted if ever CSA 120 determines that the integrity of secured storage 140 has been compromised, or if CSA 120 loses contact with certificate store 135.

MLU 115 and CSA 120 are further arranged to be in periodic or continuous communication with each other. If MLU 115 is unable to establish a connection with CSA 120, MLU 115 cannot verify it is running in protected application environment 160 and so MLU 115 deletes relevant media files in local media store 125 and key store 130. In addition, playback of media content by media player 110 is stopped. When a positive response from CSA 120 is received, MLU 115 may resume downloading and processing of media content and media player 110 may proceed with playback.

According to a further embodiment of the present invention, CSA 120 requests authentication certificate from PKI CA 145 for retrieving one or more decryption keys from key server 150. The authentication certificate has an expiry date/time defining a period during which that the relevant media content and decryption key can be stored locally in client device 105. The validity period of the media content and the decryption key may be associated with one another. When MLU 115 detects that the media content or the decryption key has expired, it will stop streaming the relevant media content to media player 110 and erase that media content in local media store 125. The expiry date of the authentication certificate can be implemented based on an open standard of PKI CA 145 and the authentication certificate, such as X.509. MLU 115 may check for expiry of the media content and the decryption key or keys even if client device 105 goes offline or after the download of the media content has finished. Advantageously, when client device 105 is online, CSA 120 may check the internal device clock with a public time service available from the Internet, to ensure the device clock has not been adjusted manually. Accordingly, the data streaming method can be further extended to the services of media content rental.

In summary, with the combined operations of MLU 115 and CSA 120 using secured storage on a protected runtime environment, HLS streaming is extended to encompass both pre-download and real-time streaming modes. In addition, retrieved media content is protected from illegal copying, as the client device is registered with a certificate authority and authenticated on key servers. The operations may be entirely transparent to the media player.

Whilst the invention has been described in connection with various embodiments, it is to be understood that the invention is not limited to these embodiments, and that alterations, modifications, and variations of these embodiments may be carried out by the skilled person without departing from the scope of the invention. For example, the media locator unit and the client security agent may be implemented as software arranged to run on a computer or processor configured to execute the software.

## Claims

1. A method of delivering media content on a device, comprising:
receiving at the device a request to stream media content;
retrieving from a local media store of the device at least a first portion of the requested media content;
delivering the at least a first portion of the requested media content to a media player of the device for playback; and
in parallel to the delivery of the at least a first portion of the requested media content, downloading at least a second portion of the requested media content from a remote media store to the device.

2. The method of claim 1, wherein the at least a second portion of requested media content is downloaded to the local media store for delivery to the media player.

3. The method of any preceding claim, wherein the at least a second portion of requested media content is downloaded according to a streaming protocol.

4. The method of any preceding claim, wherein the requested media content comprises a plurality of media segments, and wherein the at least a first portion requested media content and the at least a second portion of requested media content each comprises one or more of the plurality of media segments.

5. The method of claim 4, wherein each media segment is a portion of media content for HTTP transport, and wherein the requested media content comprises metadata.

6. The method of any preceding claim, further comprising downloading, using a media locator unit of the device, one or more decryption keys to a key store of the device.

7. The method of claim 6, wherein at least one of the first and second portions of the requested media content is encrypted and wherein the one or more decryption keys are arranged to decrypt the at least one of the first and second portions of the requested media content.

8. The method of any preceding claim, further comprising downloading, using a client security agent of the device, one or more authentication certificates to a certificate store of the device.

9. The method of claim 8 when dependent on claim 6 or 7, wherein downloading the one or more decryption keys to the key store comprises first requesting by the media locator unit an authentication certificate from the client security agent, and further comprising delivering the requested authentication certificate from the client security agent to the media locator unit.

10. The method of claim 8 when dependent on claim 6 or 7, wherein the media store, key store and certificate store are each located in a secured storage of the device.

11. The method of claim 10, further comprising determining whether the secured storage has been compromised and, if so, deleting the contents of at least one of the media store, key store and certificate store, and/or stopping playback of the requested media content.

12. The method of claim 8 when dependent on claim 6 or 7, wherein the media locator unit and the client security agent are arranged to communicate with each other, and wherein the method further comprises deleting the contents of at least one of the media store, key store and certificate store, and/or stopping playback of the requested media content, if the media locator unit and the client security unit may no longer communicate with each other.

13. A device comprising:
a media player for playback of media content;
a local media store for local storage of media content; and
a processor arranged, upon receipt of a request to stream media content, to:
retrieve from the local media store at least a first portion of the requested media content;
deliver the at least a first portion of the requested media content to the media player for playback; and
in parallel to the delivery of the at least a first portion of the requested media content, download the at least a second portion of the requested media content to the device.

14. A system for streaming media content, comprising:
a device for playback of media content;
a remote media store for storage of media content remote to the device; and
a local media store for local storage of media content on the device, wherein the device is arranged, upon receipt of a request to stream media content, to:
retrieve from the local media store at least a first portion of the requested media content;
playback the at least a first portion of the requested media content; and
in parallel to the playback of the at least a first portion of the requested media content, download the at least a second portion of the requested media content from the remote media store to the device.

15. A machine-readable medium have instructions stored thereon, wherein when executed the instructions are configured to cause the method of any of claims 1 - 12 to be carried out.
